# EUROPEAN PATENT SPECIFICATION

(11) **EP 4 480 056 B1**
(45) Date of publication and mention of the grant of the patent: **01.04.2026**
(21) Application number: 22711490.7
(22) Date of filing: 18.02.2022
(51) Int. Cl.: H02H 7/18, H02J 7/00, H02J 3/34, H02J 3/32, H02J 7/34

(54) **DISCHARGE RESISTOR ARRANGEMENT FOR ENERGY STORAGE CABINETS IN AN ENERGY STORAGE SYSTEM**
ENTLADEWIDERSTANDSANORDNUNG FÜR ENERGIESPEICHERSCHRÄNKE IN EINEM ENERGIESPEICHERSYSTEM
AGENCEMENT DE RÉSISTANCE DE DÉCHARGE POUR ARMOIRES DE STOCKAGE D'ÉNERGIE DANS UN SYSTÈME DE STOCKAGE D'ÉNERGIE

(43) Date of publication of application: 25.12.2024
(73) Proprietor: Hitachi Energy Ltd, 8050 Zürich (CH)
(72) Inventor: SÖDERBLOM, Anton, 749 43 Enköping (SE); BAI, Haofeng, 723 48 Västerås (SE); NOISETTE, Philippe, 1228 Plan-les-Ouates (CH); MENG, Lexuan, 722 12 Västerås (SE); INGESTRÖM, Gunnar, 722 45 Västerås (SE)
(74) Representative: AWA Sweden AB
(86) International application number: PCT/EP2022/054141
(87) International publication number: WO 2023/156004

(56) References cited:
- CN-A- 112 787 317
- US-A1- 2009 066 291
- US-A1- 2014 354 232
- US-A1- 2019 299 799

## Description

### TECHNICAL FIELD

The present disclosure relates to an energy storage system and a method for fault control in the energy storage system.

### BACKGROUND

Energy storage systems (ESSs) are systems for storing electrical energy in bulk. The electrical energy may have been generated by inconsistent generating means and, thus, ESSs conveniently provide a way to store generated electrical energy for later use, as desired, even if the generating means themselves are offline. As such, ESSs may form an important part of a renewable energy distribution grid comprising, for example, solar or wind generation.

ESSs may typically comprise energy storage modules arranged into cabinets, where the term 'cabinet' may be thought of as a structured collection of interconnected energy storage modules. Each energy storage module may comprise one or more energy storage cells such as (super)capacitors or the like. Thus, the arrangement of energy storage modules into cabinets may advantageously provide a modularized ESS.

Examples of such modular ESS are disclosed in US 2019/299799, US 2009/066291, CN 112 787 317. During the lifetime of an ESS, cabinets may experience failure as a result of aging, damage, or other faults experienced by components in the cabinets. In such cases, it may be desired to isolate the failed cabinet(s) from the electrical generating means and/or the grid. However, the failed cabinet may still have stored therein a significant amount of electrical energy, which may need to be discharged before the failed cabinet can be rendered safe.

### SUMMARY

According to an aspect of the present invention, as defined by claim 1, there is provided a computer-implemented method for fault response in an energy storage system (ESS). The ESS to which the method can be applied comprises a string of series-connected energy storage cabinets, each cabinet comprising a plurality of energy storage modules for storing electrical energy, wherein the energy storage cabinets of a string are configured to be collectively charged by an external power source (e.g. a renewable power source such as wind or solar) and discharged to a power grid.

The string of energy storage cabinets comprises at least two energy storage cabinets and a discharge resistor arranged such that the discharge resistor is selectively connectable to each or both of the two cabinets. By 'selectively connectable', it may be meant that the discharge resistor can, under the action of controllable switches for example, be connected to either one of the at least two cabinets without being connected to the other cabinet, or the discharge resistor can be connected to both (or all) of the at least two cabinets at the same time.

During normal operation, the cabinets of the ESS may be charged and discharged according to the needs of a power grid, for example. However, on occasion, it may be required to respond to a fault in/failure of one more of the cabinets. In respect of the present disclosure, it is assumed that the failed cabinet is one of the two (or more) cabinets that share a common discharge resistor.

Accordingly, and as described herein, the method for fault response comprises detecting a failure of a first cabinet of the at least two cabinets. The failure may be detected by any suitable means, such as via auxiliary electronics, e.g. an energy storage management system (ESMS), comprised in or connected to the cabinets.

In response to detecting the failure of the first cabinet, and in accordance with the presently disclosed method, the discharge resistor is selectively electrically connected to the first cabinet, thereby discharging electrical energy stored in the first cabinet via the discharge resistor. Whilst the first cabinet is being discharged via the discharge resistor, the second cabinet may operate normally without interruption (for example to provide power to the power grid).

By sharing a discharge resistor between multiple cabinets, the integration of a protection circuit can be simplified, as the protection circuit may comprise fewer components overall. In the present embodiments, the protection circuit includes the discharge resistor, which is shared by at least two cabinets. Furthermore, the number of terminals required in such a configuration is advantageously reduced, simplifying the construction of the ESS.

In some circumstances, after a failure of a cabinet, it is possible for current to flow through the cabinet even if a fault has occurred, depending on the type of failure. However, the amount of current able to pass through a failed cabinet may be significantly reduced.

In some further examples, a failure in a cabinet that causes a break in the current flow may impact the entire string, as the cabinets in the string are connected in series. According to some examples the string may be further connected in parallel internally, in which cases the current may still flow through a parallel component (e.g. a capacitor).

However, even in cases where current may still flow through a cabinet, a voltage may still exist across the failed component in the cabinet, and thus the fault may escalate to an even more severe fault. Hence, a bypass of the failed cabinet may be advantageous for prevention of failures that evolve over time.

According to some examples, the method may further comprise, after said discharging of the electrical energy stored in the first cabinet, electrically bypassing the first cabinet, thereby electrically isolating the first cabinet from the string. The failed cabinet, being discharged of excess electrical energy, may then be safely repaired or replaced whilst a bypass thereof is in place.

The electrical bypass may be similarly selective as with the discharge resistor. That is, the first cabinet may be electrically bypassed without also bypassing the second cabinet, such that the second cabinet can continue to operate normally as part of the string.

Electrically bypassing the first cabinet may comprise electrically isolating the first cabinet whilst the discharge resistor is still selectively connected across the first cabinet. Accordingly, normal current flow in the string (i.e. unimpeded by faults/failures) can be restored as soon as possible even if the first cabinet has not entirely discharged its electrical energy to an acceptable level (e.g. zero or some safety threshold). Thereafter, the first cabinet may continue discharging its electrical energy via the discharge resistor.

Electrically bypassing the first cabinet may further comprise electrically disconnecting the first cabinet from the discharge resistor, either at a same time as electrically isolating the first cabinet from the string, or after the first cabinet has been electrically isolated from the string.

By disconnecting the discharge resistor from the first cabinet (e.g. after determining that enough electrical energy has been discharged from the first cabinet), the discharge resistor is made available for selective electrical connection to the second cabinet, should the second cabinet be at risk of failure.

Thus, in some examples, the discharge resistor may be configured such that it is only selectively connected to the energy storage cabinet(s) for a required time to discharge said cabinet(s) to an acceptable level (e.g. zero or some threshold amount of electrical energy storage). It may be preferred to discharge a failed cabinet to zero so as to reduce potential inrush current through bypass circuit employed in bypassing the failed cabinet.

In some examples, the second cabinet may fail before the first cabinet. In such a case, a method for fault response may comprise detecting a failure of the second cabinet of the two cabinets; and in response to detecting the failure of the second cabinet, selectively electrically connecting the discharge resistor to the second cabinet, thereby discharging electrical energy stored in the second cabinet via the discharge resistor.

In other examples, the second cabinet may fail after the first cabinet has already failed. Assuming the failed first cabinet has already been electrically isolated from the string, the fault response in this situation may be substantially similar to the case where the second cabinet fails before the first cabinet.

That is, the fault response may further comprise (whilst the first cabinet is bypassed) detecting a failure of the second cabinet, and in response to detecting the failure of the second cabinet, selectively electrically connecting the discharge resistor to the second cabinet, thereby discharging electrical energy stored in the second cabinet via the discharge resistor.

According to some examples, both (or all) of the at least two cabinets sharing the same discharge resistor may fail at the same time. In such situations, the fault response method may comprise detecting the failure of the second cabinet at a same time as detecting the failure of the first cabinet. Thereafter, in response to detecting the failure of the first cabinet and the second cabinet, the method may further comprise connecting the discharge resistor to the first cabinet and the second cabinet simultaneously.

In a particular ESS, it may be assumed that simultaneous failures of multiple cabinets is a (very) unlikely circumstance. Thus, in such systems, it may be assumed that the discharge may only be required to selectively electrically connect to one energy storage cabinet at a time. Accordingly, the discharge resistor may only be afforded an appropriate resistance for discharging electrical energy from one cabinet at a time.

Alternatively, the discharge resistor may instead be rated for a worst case scenario wherein all cabinets that the discharge resistor is selectively electrically connectable to fail.

In a case where all of the two of more cabinets fail at a same time, the fault response method may further comprise electrically bypassing all of the two or more cabinets, thereby electrically isolating said cabinets from the string. These cabinets may then be disconnected from the discharge resistor once they have been sufficiently discharged of their electrical energy, or this may not be required, as in such a situation, there may be no further non-failed cabinets for the discharge resistor to selectively connect to.

The discharge resistor may be connected to the electrical cabinets in any suitable way to allow for a selective electrical connection thereto. The configuration of these connections may also be optimized to allow for a bypass circuit to individually isolate a failed cabinet from the string.

The ESS may further comprise a fault response controller configured to control and/or co-ordinate the fault response method. The fault response may be a data processing device such as a computer or the like, comprising means for carrying out the fault response method. The fault response method may be stored in the form of instructions comprised in a computer-readable medium such that, when the instructions are executed by a computer, the computer carries out the fault response method.

The fault response controller may be unique to the particular string or may be responsible for monitoring and co-ordinating fault responses for a plurality of strings in the ESS or across multiple ESSs. The fault controller may be located within a control room separate to an energy storage room containing the ESS that it controls. The fault controller may then be connected to the ESS via any wired or wireless means suitable for communicating control signals.

In one example ESS configuration having two cabinets sharing a common discharge resistor, the discharge resistor may be selectively electrically connectable to either or both of the cabinets using only four switches, whilst also providing a bypass circuit for electrically isolating failed cabinets from the string and disconnecting the discharge resistor from failed cabinets once electrical energy has been discharged therefrom.

Each energy storage cabinet may comprise terminals for interconnecting the string of cabinets, e.g. a positive and a negative terminal. For the purposes of illustrating the electrical connections in the presently described configuration of the ESS, the terminals of the cabinets shall be referred to as a first terminal and a second terminal for each cabinet. According to this labelling scheme, the second terminal of the first cabinet may be connected to the first terminal of the second cabinet as part of the series connection of the string to which the two cabinets belong.

The discharge resistor may also comprise what shall be referred to as a first terminal and a second terminal for connecting to the cabinets.

The first terminal of the first cabinet may be connected to the first terminal of the discharge resistor via a first switch and the second terminal of the first cabinet may be connected to the second terminal of the discharge resistor via a second switch.

Furthermore, the first terminal of the second cabinet may be connected to the first terminal of the discharge resistor via a third switch, and the second terminal of the second cabinet may be connected to the second terminal of the discharge resistor via a fourth switch.

To provide a configuration that minimizes terminals and conveniently provides for a bypass of failed cabinets and disconnection thereof from the discharge resistor, the second terminal of the first cabinet may be connected to the first terminal of the discharge resistor via the third switch, and the first terminal of the second cabinet is connected to the second terminal of the discharge resistor via the second switch.

The fault response controller may be configured to control the first switch, the second switch, the third switch, and the fourth switch. For example, the fault controller may control switching coils comprised in the switches and monitor the statuses of the switches (i.e. closed or open). The switches themselves may be mounted somewhere in either the first and/or the second cabinet, or in a separate module e.g. mounted on or between the two energy storage cabinets.

According to the above-described example configuration of the ESS, selectively electrically connecting the discharge resistor to the first cabinet (without connecting the discharge resistor to a second cabinet) may comprise closing the first switch and the second switch.

Electrically bypassing the first cabinet after discharging the electrical energy stored in the first cabinet may comprise opening the second switch and closing the third switch. Thereafter, if the second cabinet fails whilst the first cabinet is being bypassed, selectively electrically connecting the discharge resistor to the second cabinet may comprise closing the fourth switch whilst the first cabinet is electrically bypassed.

Electrically bypassing the second cabinet after discharging the electrical energy stored in the second cabinet may then comprise closing the second switch.

It will be appreciated that this configuration of switches and method of operating them may combine the acts of electrically isolating the failed cabinet(s) from the string and disconnected the failed cabinet(s) from the discharge resistor. If it desired that these steps be separate (or separable), the configuration and/or operation of switches may be adapted.

The present invention is described in the following by way of a number of illustrative examples. It will be appreciated that these examples are provided for illustration and explanation only and are not intended to be limiting on the scope of the present invention. Instead, the scope of the present invention is to be defined by the appended claims. Furthermore, although the examples may be presented in the form of individual embodiments, it will be recognized that the invention also covers combinations of the embodiments described herein.

### BRIEF DESCRIPTION OF THE FIGURES

The above and other aspects of the present disclosure will now be described in more detail, with reference to the appended figures, wherein:
Figure 1 schematically shows an energy storage system, according to embodiments;
Figure 2 schematically shows an energy storage cabinet of an energy storage system, according to embodiments;
Figure 3 schematically shows a discharge resistor arrangement for energy storage cabinets, according to embodiments;
Figure 4 schematically shows an example fault response method for an energy storage system, according to embodiments;
Figure 5 illustrates a current flow through energy storage cabinets and a discharge resistor according to the method shown in figure 4;
Figure 6 shows another example fault response method for an energy storage system, according to embodiments; and
Figure 7 illustrates a current flow through energy storage cabinets and a discharge resistor according to the method shown in figure 6.

### DETAILED DESCRIPTION

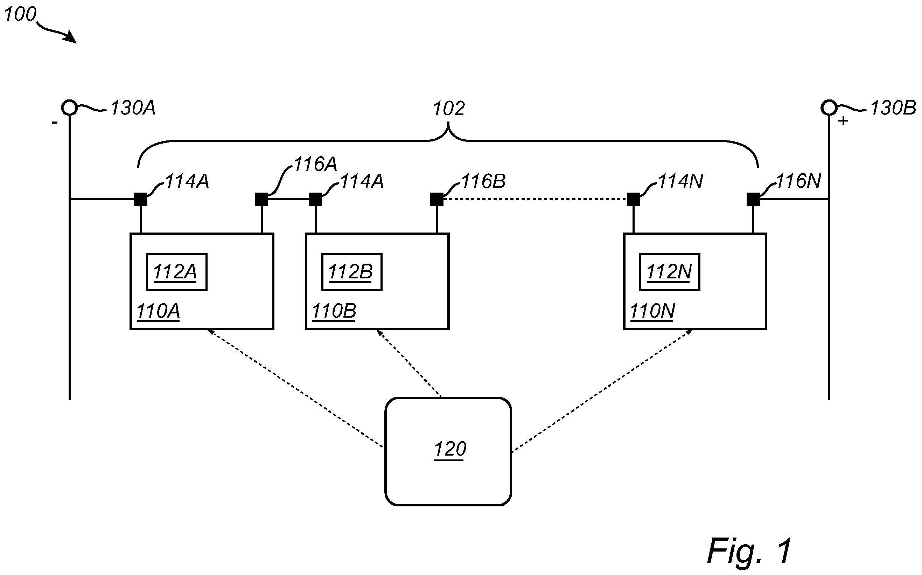

Figure 1 schematically shows an energy storage system (ESS) 100 comprising a string 102 of energy storage cabinets 110A, 110B...110N (collectively referred to in the present description as 'energy storage cabinets 110' or simply 'cabinets 110').

Some or all of the cabinets 110 may comprise auxiliary electronics 112A-112N (collectively referred to in the present description as "auxiliary circuitry 112"), such as monitoring, control and/or protection circuitry. Some cabinets 110 may comprise different auxiliary circuitry 112 than other cabinets 110.

For example, the auxiliary electronics 112A in cabinet 110A may comprise monitoring and control circuitry for cabinet 110A as well as shared protection circuitry for cabinets 110A and 110B, whilst the auxiliary electronics 112B in cabinet 110B may only comprise monitoring and control circuitry for cabinet 110B. This approach to shared protection circuitry, as discussed in more detail below, may advantageously reduce the number of terminals required in the cabinets 110 and thereby simplify construction of the ESS 100.

The auxiliary electronics 112 may be connected, e.g. via a wired or wireless connection, to a controller 120. For example, the controller 120 may comprise a fault response controller 120 for monitoring faults/failures of the cabinets (e.g. using monitoring circuitry in the auxiliary electronics 112). The fault response controller 120 may then initiate a fault response in response to detecting a fault or failure in a cabinet 110, as described in more detail below.

Cabinet 110A is connected into the string 102 via terminals 114A and 116B, which may be thought of as negative and positive terminals, or first and second terminals, respectively. Similarly, cabinet 110B is connected into the string 102 in series via its terminals 114B and 116B. Generally speaking, the cabinets 110 are interconnected in the string 102 via a first terminal 114 and a second terminal 116.

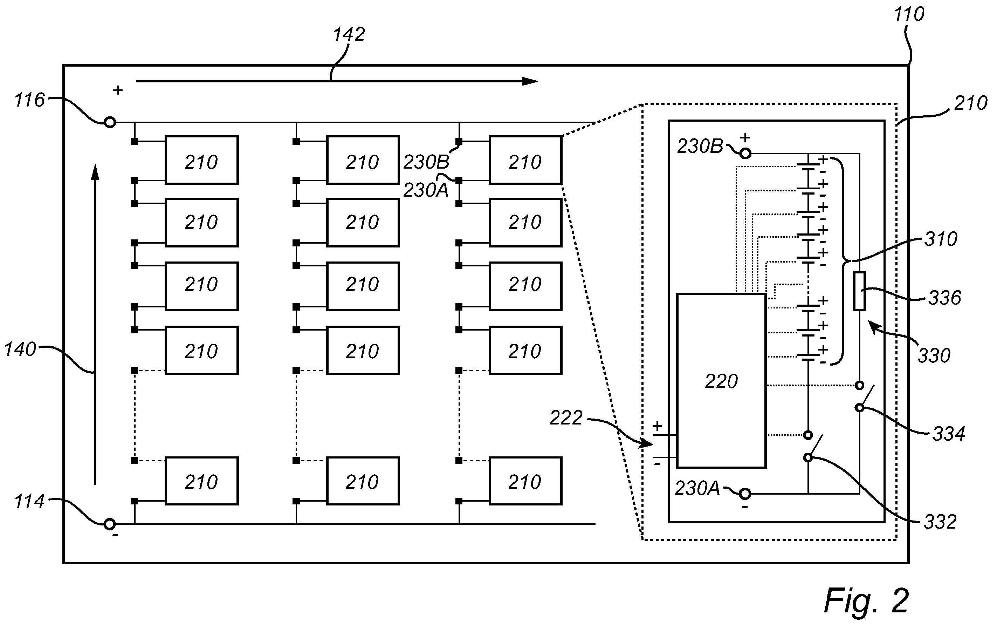

The string 102 may comprise primary terminals 130A and 130B for connection to further strings or to a device for charging/discharging the ESS 100. For example, the terminals 130 of the ESS 100 may be connected or connectable to an electrical generation means such as a solar or wind farm (e.g. via rectifiers and/or transformers) such that the ESS 100 is chargeable by the electrical generation means. More specifically, the cabinets 110 may comprise a plurality energy storage modules for storing electrical energy, as described in more detail in relation to figure 2.

The terminals 130 may also be connected or connectable to an electrical load such as a power grid (e.g. as part of an enhanced STATCOM system or the like). Thus, the ESS 100 may form part of a renewable power grid system whereby renewable electrical generation means charge the ESS 100 during times of excess generation, and the ESS 100 may then discharge stored electrical energy to the power grid during deficits of electrical generation by the electrical generation means.

Thus, a more reliable and stable renewably-supplied power grid may be provided using the described ESS 100 as a supplementary source of electrical energy. It follows therefore that an improved operation of the fault controller 120 may allow for a more reliable function of the ESS 100 in its capability of delivering such supplementary electrical energy.

Figure 2 schematically shows an energy storage cabinet 110 of an ESS such as ESS 100 shown in figure 1. As illustrated, the energy storage cabinet 110 may comprise a plurality of energy storage modules 210 (or simply `modules 210') arranged vertically (indicated by the arrow 140) and horizontally (indicated by the arrow 142) into series and parallel connections, respectively. It will be appreciated that the terms 'horizontal' and 'vertical' used in this sense are used to illustrate the electrical interconnections of the modules 210. The physical arrangement of these modules 210 may not correspond entirely with their electrical arrangement.

Each column of modules 210 is connected across terminals 114 and 116, which may correspond to the terminals 114 and 116 shown in figure 1. That is, terminals 114 and 116 as illustrated in figure 2 may be points of connection via which the cabinet 110 as a whole is charged and discharged. Thus, it will be appreciated that charging and discharging of a cabinet 210 as referred to herein is in fact a charging and discharging of the plurality of energy storage modules 210 contained therein.

Moreover, the construction of an energy storage module 210 is also revealed in a zoomed view in figure 2, as indicated by the dotted lines extending from the right-most and upper-most module 210.

Each module 210 may comprise a plurality of energy storage cells 310 (or simply 'cells 310'). In the illustrated example, the cells 310 are shown as being (super)capacitors, but it will be appreciated that the cells 310 may instead be batteries, or a combination of batteries and/or (super)capacitors.

The cells 310 may be arranged between terminals 230A and 230B such that the terminals 230A and 230B can serve as a common point of (inter)connection for the modules 210 in the cabinet 110.

The module 210 may further comprise a module control system 220 communicatively and/or electrically coupled to the components of the module 210 so as to, for example, monitor their health, control their operation, and/or maintain a module protection circuit 330. The module protection circuit 330 may comprise a breaker switch 332 for disconnecting the cells 310 of the module 210 from the rest of the column of modules 210, a bypass switch 334 and a protection resistor 336.

The module control system 220 may form part of the auxiliary electronics 112 referred to in relation to figure 1, and may be provided with data and/or power via connections 222, although the particular functions and operations of these internal components is beyond the scope of the present disclosure.

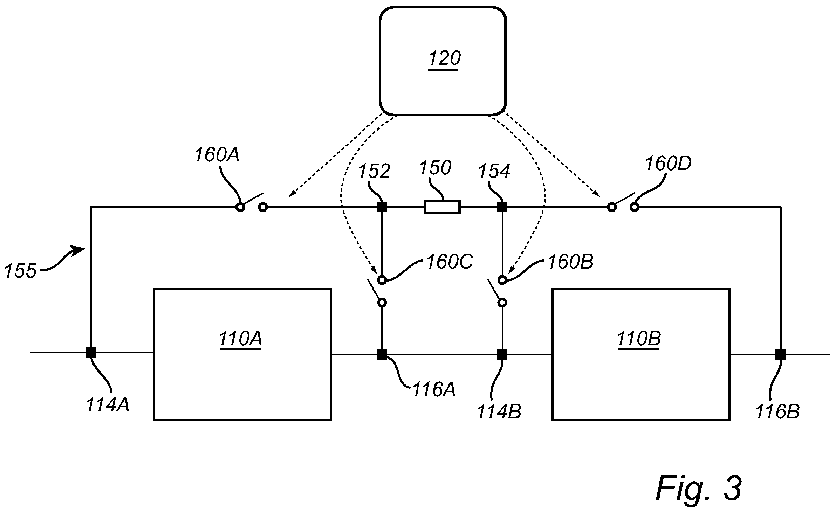

Figure 3 schematically shows a discharge resistor 150 arrangement for energy storage cabinets 110A and 110B. The discharge resistor 150 may be connected to the cabinets 110A and 110B via fault-response circuitry 155, which may be formed of wiring, cabling or the like, and switches 160A-D (collectively referred to as 'switches 160').

Cabinet 110A may have terminals 114A and 116A and cabinet 110B may have terminals 114B and 116B, similarly as those described in relation to figure 1, such that the second terminal 116A of the first cabinet 110A is connected to the first terminal 114B of the second cabinet 110B. Furthermore, the discharge resistor 150 may have terminals 152 and 154 for connecting to the cabinets 110A and 110B via the fault-response circuitry 155.

Although the terminals 114, 116, 152, 154, the fault-response circuitry 155, and the discharge resistor 150 are illustrated as being external to the cabinets 110A and 110B, it will be appreciated that these may instead be incorporated physically into either or both of the cabinets 110A and 110B, or into a separate module attached thereto or therein between.

Furthermore, although only two cabinets 110A and 110B are shown, it will be appreciated that these cabinets 110 may be part of a larger string (e.g. as shown in figure 1), wherein further cabinets 110 may also share the same common discharge resistor 150.

According to the illustrated discharge resistor 150 arrangement, the first terminal 114A of the first cabinet 110A may be connected to the first terminal 152 of the discharge resistor 150 via a first switch 160A, and the second terminal 116A of the first cabinet 110A may be connected to the second terminal 154 of the discharge resistor 150 via a second switch 160B (e.g. via a common connection with the first terminal 114B of the second cabinet 110B).

Furthermore, the first terminal 114B of the second cabinet 110B may be connected to the first terminal 152 of the discharge resistor 150 via a third switch 160C (e.g. via a common connection with the second terminal 116A of the first cabinet 110A) and the second terminal 116B of the second cabinet 110B may be connected to the second terminal 154 of the discharge resistor 150 via a fourth switch 160D.

According to this arrangement, the second terminal 116A of the first cabinet 110A may be connected to the first terminal 152 of the discharge resistor 150 via the third switch 160C, and the first terminal 114B of the second cabinet 110B may be connected to the second terminal 154 of the discharge resistor 150 via the second switch 160B.

Moreover, each of the switches 160 may be operated (e.g. remotely and/or wirelessly) via the fault response controller 120 which may be the same or similar to the fault response controller discussed in relation to figure 1.

Particular advantages of the foregoing described discharge resistor 150 arrangement shall become apparent in the following description of example operations thereof.

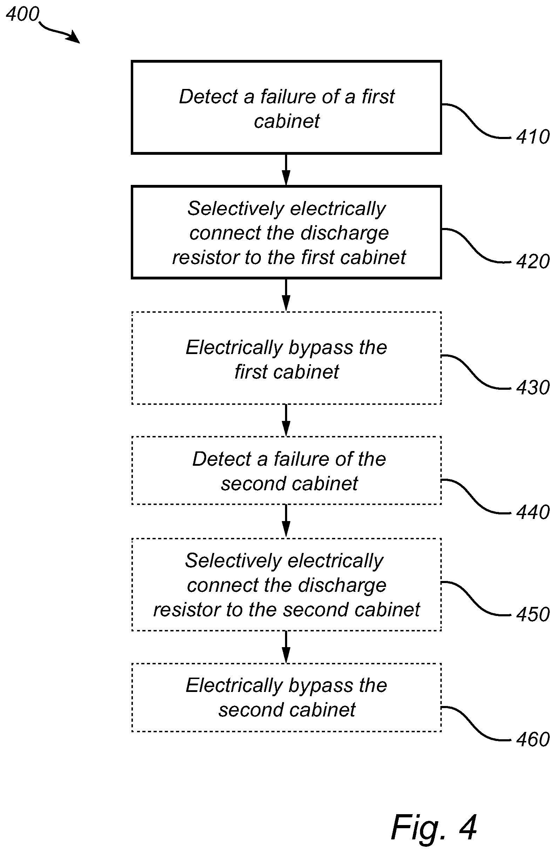

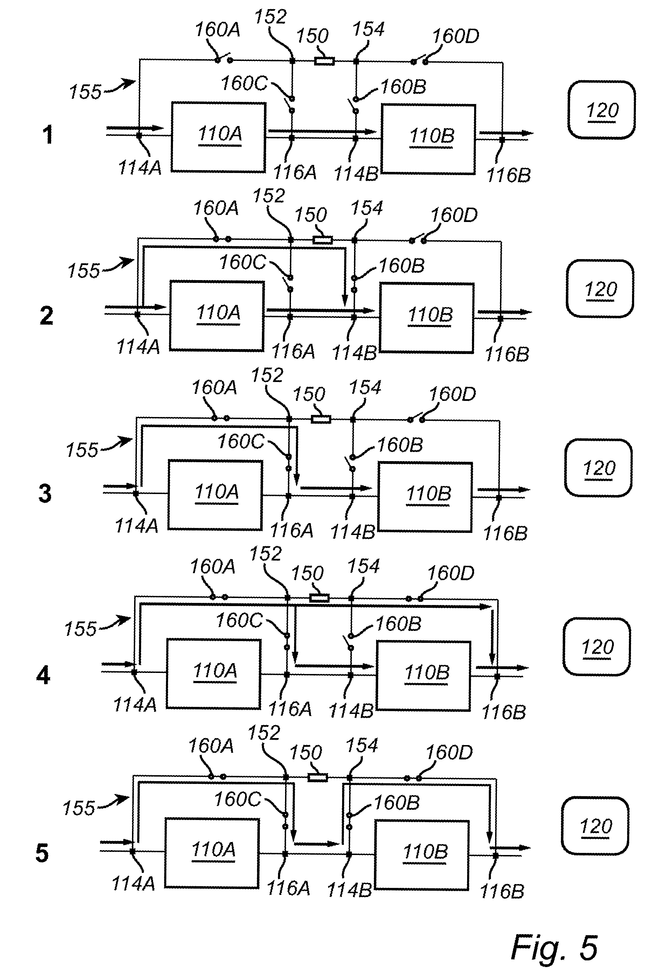

Figure 4 schematically shows an example fault response method 400 for an ESS such as the ESS 100 shown in figure 1, comprising (e.g. as auxiliary electronics 112 shown in figure 1), a discharge resistor arrangement such as that shown in figure 3. The method 400 may be performed by a fault response controller (e.g. fault response controller 120 shown in figures 1 and 3), for example by executing a series of computer-readable instructions encoding said method 400.

The following description also refers to figure 5, which illustrates the described method 400 of figure 4.

During normal operation of the ESS, the fault response controller 120 may be monitoring energy storage cabinets 110 and/or the energy modules stored therein for faults/failures, and all switches 160 may be open. A failure may be indicated by a change in measured voltage, current, or some other measure or indication of electrical function.

Then, the controller 120 may detect 410 a failure of a first cabinet 110A. This failure is illustrated in figure 5 as a cross through cabinet 110A (step 1). In some examples, the failure may not cause an electrical break in the cabinet 110A, and current may be able to flow therethrough, where current flow is shown in figure 5 by arrows.

In response to detecting the failure, the controller 120 may then selectively electrically connect 420 the discharge resistor 150 to the first cabinet 150 by controlling the first switch 160A and the second switch 160B to close (step 2). Accordingly, a current path can be formed from the failed first cabinet 110A through the discharge resistor 150, without connecting the still-operational second cabinet 110B to the discharge resistor 150.

Thereby, electrical energy may be discharged from the failed first cabinet 110A via the discharge resistor 150. In some examples, the controller 120 may then control the second switch 160B to open and the third switch 160C to close (e.g. at the same time or in succession, in either order), to thereby electrically bypass 430 the first cabinet 110A (step 3).

It will be appreciated that the arrangement of the second switch 160B and the third switch 160C in this way allows for a convenient simultaneous electrical isolation of the failed cabinet 110A from the string, as well as a disconnection of the failed cabinet 110A from the discharge resistor 150, as part of the electrical bypass 430 process.

Once the first cabinet 110A has failed, been discharged, and then bypassed, the first cabinet 110A may be safely maintained or replaced, all whilst the still-operational second cabinet 110B is allowed to continue being charged and discharged as part of the string.

In some examples, after the first cabinet 110A has failed but before it has been replaced, the controller 120 may detect 440 a failure of the second cabinet 110B (as also shown in step 3).

Thereafter, as with the failure of the first cabinet 110A, the controller 120 may selectively electrically connect 450 the discharge resistor 150 to the second cabinet 110B. This may be achieved by controlling the fourth switch 160D to close, such that, at this stage of operation (step 4) the first switch 160A, the third switch 160C, and the fourth switch 160D are closed. The discharge resistor 150 may thereby discharge electrical energy from the failed second cabinet 110B whilst current flow is still bypassing the failed first cabinet 110A.

Once the failed second cabinet 110B has been discharged (e.g. to zero or some threshold level), the controller 120 may then control the second switch 160B to close, so as to electrically bypass 460 the second cabinet 110B (step 5). According to the arrangement of the discharge resistor 150 and the switches 160, the electrical bypass 460 step may comprise a simultaneous electrical isolation of the failed second cabinet 110B and disconnection thereof from the discharge resistor 150.

The method 400 described above may be performed with a reversed order of failure for the first cabinet 110A and the second cabinet 110B, for example if the second cabinet 110B were to fail before the first cabinet 110A.

According to the above-illustrated method 400, the discharge resistor 150 need (and can) only be selectively connected to one cabinet 110 at a time. Thus, as opposed to a comparative example wherein each cabinet 110 is provided with its own discharge resistor 150 and fault-response circuitry 155, the presently disclosed approach allows for a significant reduction in components and terminals without substantial compromise in respect of safety or reliability.

That is, it can be considered unlikely that both cabinets 110A and 110B will fail at a same time. Therefore, in some embodiments, the discharge resistor 150 may be rated/sized (e.g. in respect of its resistance) in accordance with an expected discharge of the electrical energy from one cabinet 110 at a time. For example, the discharge resistor 150 may have a resistance of 0.5 to 1 Ohms, or more or less, depending e.g. on the expected energy storage capacity of the cabinet(s) 110 and/or the desired rate of discharge thereof.

In some other examples, it may be expected that all or both of at least two cabinets (e.g. cabinets 110A and 110B) fail at a same or similar time, such that it is desired to discharge electrical energy from both cabinets at the same time, or at least at an overlapping time (with selective disconnection of the discharge resistor 150 from either cabinet 110).

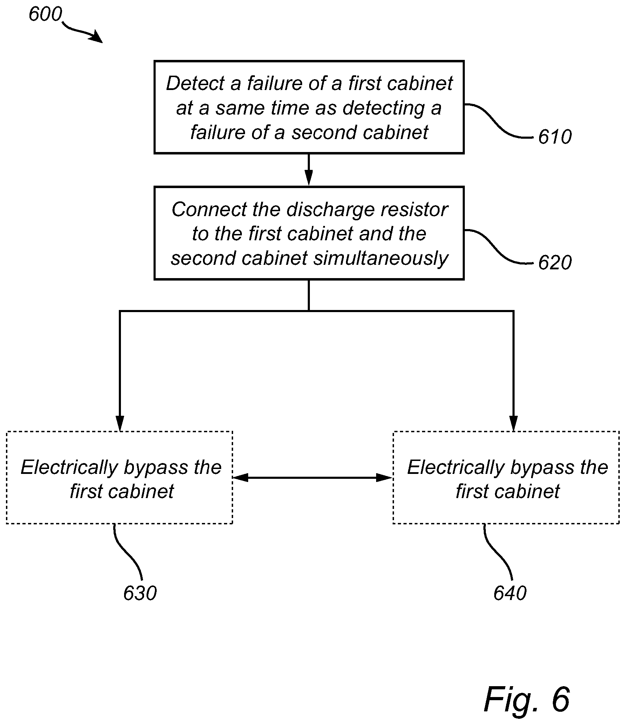

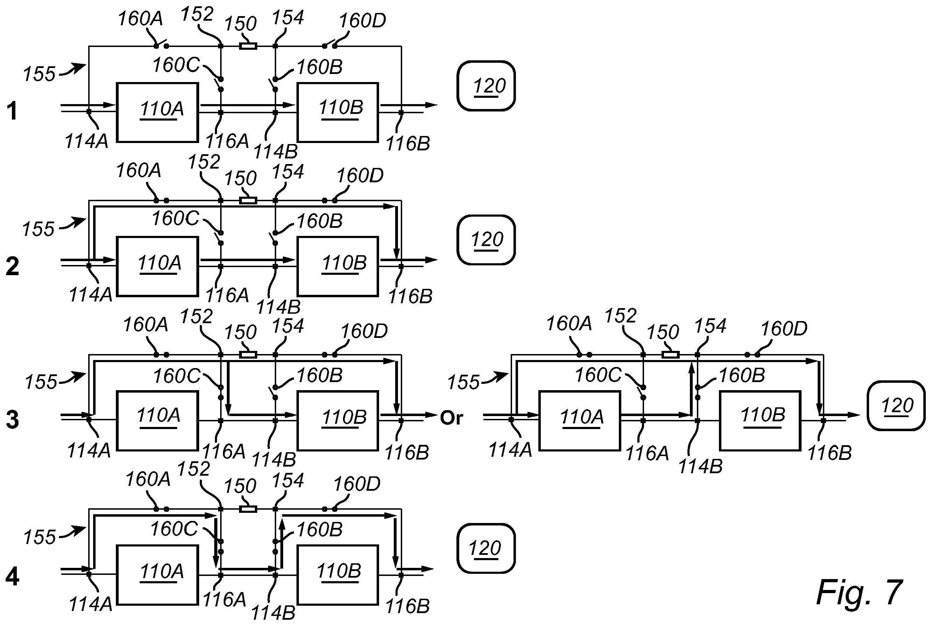

An example method 600 according this alternative is discussed and illustrated with regard to figures 6 and 7, figure 7 illustrating the method 600 of figure 6. Again, the switches 160 may be open during normal operation of the ESS.

According to this example method 610, the fault response controller 120 may detect 610 a failure of the first cabinet 110A at a same time as detecting a failure of the second cabinet 110B (step 1). The detection 610 may be simultaneous or at least contemporaneous such that a response to the failure is determined to be required at a same time. Furthermore, separate to the detection 610 thereof, the failure of the cabinets 110A and 110B may not have necessarily occurred at the same time.

As well as being selectively connectable to each cabinet 110A and 110B individually, the discharge resistor 150 may also be connectable to both cabinets 110A and 110B at the same time. Thus, in response to detecting 610 the failure of the cabinets 110A and 110B, the fault response controller 120 may control the first switch 160A and the fourth switch 160D to close to thereby connect 620 the discharge resistor 150 to the first cabinet 110A and the second cabinet 110B simultaneously (step 2).

The cabinets 110A and 110B may then discharge their stored electrical energy via the discharge resistor 150. Compared to the situation described previously, wherein one failed cabinet 110 is discharged at a time, the discharge of both cabinets 110A and 110B may take longer to complete.

The cabinets 110A and 110B may then be simultaneously or sequentially electrically bypassed 630, 640. For example, the fault response controller 120 may control the second switch 160B or the third switch 160C to close before closing the other of these two (as illustrated in step 3). The selection as to which switch 160 is closed first may be based on a determination of which cabinet 110 may require further discharge via the discharge resistor 150. It is also possible that both switches 160B and 160C are controlled to close at substantially the same time.

Irrespective of the control sequence, the method 600 may terminate with both cabinets 110A and 110B being electrically isolated from the string and disconnected from the discharge resistor 150 (step 4).

The cabinets 110A and 110B may then be safely maintained or replaced, whilst the closed switches 160A, 160B, 160C and 160D provide a bypass current path via which the string (and thus the ESS) can continue with normal operations, e.g. charging from electrical generation means or discharging to a power grid.

Although specific operational examples have been discussed above, it will be appreciated that these examples have been provided for illustrative purposes only, and are not intended to be limiting upon the scope of the present disclosure. Indeed, any combination of the above described examples shall be considered as falling within the scope of the present disclosure. For the avoidance of doubt, it is the intention for the scope of the present invention to be defined by the following claims.

## Claims

1. A computer-implemented method for fault response in an energy storage system (ESS) configured to provide power to a power grid, wherein the ESS comprises:
a string (102) of series-connected energy storage cabinets (110A, 110B, 110C),
each cabinet comprising a plurality of energy storage modules (210, 310)
for storing electrical energy,
wherein:
the energy storage cabinets of a string are configured to be collectively charged by an external power source and discharged to a power grid, and
the string of energy storage cabinets comprises at least two energy storage cabinets and a discharge resistor (150) arranged such that the discharge resistor is selectively connectable to each or both of the two cabinets,
the method comprising:
detecting a failure of a first cabinet of the two cabinets; and
in response to detecting the failure of the first cabinet, selectively electrically connecting the discharge resistor to the first cabinet, thereby discharging electrical energy stored in the first cabinet via the discharge resistor.

2. The computer-implemented method of claim 1, further comprising:
after said discharging of the electrical energy stored in the first cabinet, electrically bypassing the first cabinet, thereby electrically isolating the first cabinet from the string.

3. The computer-implemented method of claim 2, wherein:
electrically bypassing the first cabinet further comprises electrically disconnecting the first cabinet from the discharge resistor.

4. The computer-implemented method of any of claims 1 to 3, further comprising:
detecting a failure of the second cabinet; and
in response to detecting the failure of the second cabinet, selectively electrically connecting the discharge resistor to the second cabinet, thereby discharging electrical energy stored in the second cabinet via the discharge resistor.

5. The computer-implemented method of claim 4, further comprising:
detecting the failure of the second cabinet at a same time as detecting the failure of the first cabinet, wherein:
in response to detecting the failure of the first cabinet and the second cabinet, the discharge resistor is connected to the first cabinet and the second cabinet simultaneously.

6. The computer-implemented method of claim 4 or claim 5, further comprising:
after said discharging of the electrical energy stored in the second cabinet, electrically bypassing the second cabinet, thereby electrically disconnecting the second cabinet from the string.

7. The computer-implemented method of claim 6, wherein:
electrically bypassing the second cabinet further comprises electrically disconnecting the second cabinet from the discharge resistor.

8. A computer-readable medium comprising instructions which, when executed by a computer, cause the computer to carry out the method of any of claims 1 to 7.

9. A data processing device comprising means for carrying out the method of any of claims 1 to 7.

10. An energy storage system (ESS) comprising:
a string of series-connected energy storage cabinets, each cabinet comprising a plurality of energy storage modules, wherein the string is configured to be collectively charged and discharged, and wherein the string of energy storage cabinets comprises at least two energy storage cabinets;
a discharge resistor arranged such that the discharge resistor is selectively connectable to each or both of the two cabinets; and
a fault response controller comprising the data processing device of claim 9.

11. The ESS of claim 10, wherein:
each energy storage cabinet comprises a first terminal and a second terminal for interconnecting the string of cabinets;
the second terminal of the first cabinet is connected to the first terminal of the second cabinet;
the discharge resistor comprises a first terminal and a second terminal for connecting to the cabinets;
the first terminal of the first cabinet is connected to the first terminal of the discharge resistor via a first switch;
the second terminal of the first cabinet is connected to the second terminal of the discharge resistor via a second switch;
the first terminal of the second cabinet is connected to the first terminal of the discharge resistor via a third switch;
the second terminal of the second cabinet is connected to the second terminal of the discharge resistor via a fourth switch;
the second terminal of the first cabinet is connected to the first terminal of the discharge resistor via the third switch;
the first terminal of the second cabinet is connected to the second terminal of the discharge resistor via the second switch; and
the fault response controller is configured to control the first switch, the second switch, the third switch, and the fourth switch.

12. The ESS of claim 11, wherein:
selectively electrically connecting the discharge resistor to the first cabinet comprises:
closing the first switch and the second switch.

13. The ESS of claim 12, wherein:
electrically bypassing the first cabinet after discharging the electrical energy stored in the first cabinet comprises:
opening the second switch and closing the third switch.

14. The ESS of claim 13, wherein:
selectively electrically connecting the discharge resistor to the second cabinet comprises:
closing the fourth switch whilst the first cabinet is electrically bypassed.

15. The ESS of claim 14, wherein:
electrically bypassing the second cabinet after discharging the electrical energy stored in the second cabinet comprises:
closing the second switch.

## Patentansprüche

1. Computerimplementiertes Verfahren zur Ausfallreaktion in einem Energiespeichersystem (ESS), das dazu ausgelegt ist, Leistung an ein Stromnetz bereitzustellen, wobei das ESS Folgendes umfasst:
eine Kette (102) von in Reihe verbundenen Energiespeicherschränken (110A, 110B, 110C), wobei jeder Schrank mehrere Energiespeichermodule (210, 310) zum Speichern elektrischer Energie umfasst, wobei:
die Energiespeicherschränke einer Kette dazu ausgelegt sind, gemeinsam durch eine externe Leistungsquelle geladen und in ein Stromnetz entladen zu werden, und
die Kette von Energiespeicherschränken mindestens zwei Energiespeicherschränke und einen Entladewiderstand (150) umfasst, der so angeordnet ist, dass der Entladewiderstand selektiv mit jedem oder beiden der zwei Schränke verbindbar ist,
wobei das Verfahren Folgendes umfasst:
Detektieren eines Ausfalls eines ersten Schranks der beiden Schränke; und
als Reaktion auf das Detektieren des Ausfalls des ersten Schranks, selektives elektrisches Verbinden des Entladewiderstands mit dem ersten Schrank, wodurch elektrische Energie, die in dem ersten Schrank gespeichert ist, über den Entladewiderstand entladen wird.

2. Computerimplementiertes Verfahren nach Anspruch 1, das ferner Folgendes umfasst:
nach dem Entladen der in dem ersten Schrank gespeicherten elektrischen Energie, elektrisches Umgehen des ersten Schranks, wodurch der erste Schrank elektrisch von der Kette isoliert wird.

3. Computerimplementiertes Verfahren nach Anspruch 2, wobei:
das elektrische Umgehen des ersten Schranks ferner das elektrische Trennen des ersten Schranks von dem Entladewiderstand umfasst.

4. Computerimplementiertes Verfahren nach einem der Ansprüche 1 bis 3, das ferner Folgendes umfasst:
Detektieren eines Ausfalls des zweiten Schranks; und
als Reaktion auf das Detektieren des Ausfalls des zweiten Schranks, selektives elektrisches Verbinden des Entladewiderstands mit dem zweiten Schrank, wodurch elektrische Energie, die in dem zweiten Schrank gespeichert ist, über den Entladewiderstand entladen wird.

5. Computerimplementiertes Verfahren nach Anspruch 4, das ferner Folgendes umfasst:
Detektieren des Ausfalls des zweiten Schranks gleichzeitig mit dem Detektieren des Ausfalls des ersten Schranks, wobei:
als Reaktion auf das Detektieren des Ausfalls des ersten Schrankes und des zweiten Schrankes der Entladewiderstand gleichzeitig mit dem ersten Schrank und dem zweiten Schrank verbunden wird.

6. Computerimplementiertes Verfahren nach Anspruch 4 oder Anspruch 5, das ferner Folgendes umfasst:
nach dem Entladen der in dem zweiten Schrank gespeicherten elektrischen Energie, elektrisches Umgehen des zweiten Schranks, wodurch der zweite Schrank elektrisch von der Kette getrennt wird.

7. Computerimplementiertes Verfahren nach Anspruch 6, wobei:
das elektrische Umgehen des zweiten Schranks ferner das elektrische Trennen des zweiten Schranks von dem Entladewiderstand umfasst.

8. Computerlesbares Medium, das Anweisungen umfasst, die, wenn sie durch einen Computer ausgeführt werden, bewirken, dass der Computer das Verfahren nach einem der Ansprüche 1 bis 7 ausführt.

9. Datenverarbeitungsvorrichtung, die Mittel zum Ausführen des Verfahrens nach einem der Ansprüche 1 bis 7 umfasst.

10. Energiespeichersystem (ESS), das Folgendes umfasst: eine Kette von in Reihe verbundenen Energiespeicherschränken, wobei jeder Schrank mehrere Energiespeichermodule umfasst, wobei die Kette dazu ausgelegt ist, gemeinsam geladen und entladen zu werden, und wobei die Kette von Energiespeicherschränken mindestens zwei Energiespeicherschränke umfasst;
einen Entladewiderstand, der so angeordnet ist, dass der Entladewiderstand selektiv mit jedem oder beiden der beiden Schränke verbunden werden kann; und
eine Ausfallreaktionssteuerung, die die Datenverarbeitungsvorrichtung nach Anspruch 9 umfasst.

11. ESS nach Anspruch 10, wobei:
jeder Energiespeicherschrank einen ersten Anschluss und einen zweiten Anschluss zum Verbinden der Kette von Schränken umfasst;
der zweite Anschluss des ersten Schranks mit dem ersten Anschluss des zweiten Schranks verbunden ist;
der Entladewiderstand einen ersten Anschluss und einen zweiten Anschluss zum Verbinden mit den Schränken umfasst;
der erste Anschluss des ersten Schranks über einen ersten Schalter mit dem ersten Anschluss des Entladewiderstands verbunden ist;
der zweite Anschluss des ersten Schranks über einen zweiten Schalter mit dem zweiten Anschluss des Entladewiderstands verbunden ist;
der erste Anschluss des zweiten Schranks über einen dritten Schalter mit dem ersten Anschluss des Entladewiderstands verbunden ist;
der zweite Anschluss des zweiten Schranks über einen vierten Schalter mit dem zweiten Anschluss des Entladewiderstands verbunden ist;
der zweite Anschluss des ersten Schranks über den dritten Schalter mit dem ersten Anschluss des Entladewiderstands verbunden ist;
der erste Anschluss des zweiten Schranks über den zweiten Schalter mit dem zweiten Anschluss des Entladewiderstands verbunden ist; und
die Ausfallreaktionssteuerung dazu ausgelegt ist, den ersten Schalter, den zweiten Schalter, den dritten Schalter und den vierten Schalter zu steuern.

12. ESS nach Anspruch 11, wobei:
das selektive elektrische Verbinden des Entladewiderstands mit dem ersten Schrank umfasst:
Schließen des ersten Schalters und des zweiten Schalters.

13. ESS nach Anspruch 12, wobei:
das elektrische Umgehen des ersten Schranks nach dem Entladen der in dem ersten Schrank gespeicherten elektrischen Energie umfasst:
Öffnen des zweiten Schalters und Schließen des dritten Schalters.

14. ESS nach Anspruch 13, wobei:
das selektive elektrische Verbinden des Entladewiderstands mit dem zweiten Schrank umfasst:
Schließen des vierten Schalters, während der erste Schrank elektrisch umgangen wird.

15. ESS nach Anspruch 14, wobei:
das elektrische Umgehen des zweiten Schranks nach dem Entladen der in dem zweiten Schrank gespeicherten elektrischen Energie umfasst:
Schließen des zweiten Schalters.

## Revendications

1. Procédé mis en œuvre par ordinateur de réponse aux défauts dans un système de stockage d'énergie (ESS) configuré pour fournir de l'énergie à un réseau électrique, l'ESS comprenant :
une chaîne (102) d'armoires de stockage d'énergie connectées en série (110A, 110B, 110C), chaque armoire comprenant une pluralité de modules de stockage d'énergie (210, 310) pour stocker de l'énergie électrique,
les armoires de stockage d'énergie d'une chaîne étant configurées pour être chargées collectivement par une source d'énergie externe et déchargées vers un réseau électrique, et
la chaîne d'armoires de stockage d'énergie comprenant au moins deux armoires de stockage d'énergie et une résistance de décharge (150) disposée de telle sorte que la résistance de décharge peut être connectée sélectivement à chacune des deux armoires ou aux deux, le procédé comprenant :
la détection d'une défaillance d'une première armoire des deux armoires ; et
en réponse à la détection de la défaillance de la première armoire, la connexion électrique sélective de la résistance de décharge à la première armoire, déchargeant ainsi l'énergie électrique stockée dans la première armoire via la résistance de décharge.

2. Procédé mis en œuvre par ordinateur selon la revendication 1, comprenant en outre :
après ladite décharge de l'énergie électrique stockée dans la première armoire, le contournement électrique de la première armoire, isolant ainsi électriquement la première armoire de la chaîne.

3. Procédé mis en œuvre par ordinateur selon la revendication 2,
le contournement électrique de la première armoire comprenant en outre la déconnexion électrique de la première armoire de la résistance de décharge.

4. Procédé mis en œuvre par ordinateur selon l'une quelconque des revendications 1 à 3, comprenant en outre :
la détection d'une défaillance de la deuxième armoire ; et
en réponse à la détection de la défaillance de la deuxième armoire, la connexion électrique sélective de la résistance de décharge à la deuxième armoire, déchargeant ainsi l'énergie électrique stockée dans la deuxième armoire via la résistance de décharge.

5. Procédé mis en œuvre par ordinateur selon la revendication 4, comprenant en outre :
la détection de la défaillance de la deuxième armoire simultanément à la détection de la défaillance de la première armoire,
en réponse à la détection de la défaillance de la première armoire et de la deuxième armoire, la résistance de décharge étant connectée simultanément à la première armoire et à la deuxième armoire.

6. Procédé mis en œuvre par ordinateur selon la revendication 4 ou la revendication 5, comprenant en outre :
après ladite décharge de l'énergie électrique stockée dans la deuxième armoire, le contournement électrique de la deuxième armoire, déconnectant ainsi électriquement la deuxième armoire de la chaîne.

7. Procédé mis en œuvre par ordinateur selon la revendication 6,
le contournement électrique de la deuxième armoire comprenant en outre la déconnexion électrique de la deuxième armoire de la résistance de décharge.

8. Support lisible par ordinateur comprenant des instructions qui, lorsqu'elles sont exécutées par un ordinateur, amènent l'ordinateur à mettre en œuvre le procédé selon l'une quelconque des revendications 1 à 7.

9. Dispositif de traitement de données comprenant des moyens pour mettre en œuvre le procédé selon l'une quelconque des revendications 1 à 7.

10. Système de stockage d'énergie (ESS) comprenant :
une chaîne d'armoires de stockage d'énergie connectées en série, chaque armoire comprenant une pluralité de modules de stockage d'énergie, la chaîne étant configurée pour être chargée et déchargée collectivement, et la chaîne d'armoires de stockage d'énergie comprenant au moins deux armoires de stockage d'énergie ;
une résistance de décharge agencée de telle sorte que la résistance de décharge peut être connectée sélectivement à chacune des deux armoires ou aux deux ; et
un contrôleur de réponse aux défauts comprenant le dispositif de traitement de données selon la revendication 9.

11. ESS selon la revendication 10,
chaque armoire de stockage d'énergie comprenant une première borne et une deuxième borne d'interconnexion de la chaîne d'armoires ;
la deuxième borne de la première armoire étant connectée à la première borne de la deuxième armoire,
la résistance de décharge comprenant une première borne et une deuxième borne de connexion aux armoires ;
la première borne de la première armoire étant connectée à la première borne de la résistance de décharge via un premier commutateur ;
la deuxième borne de la première armoire étant connectée à la deuxième borne de la résistance de décharge via un deuxième commutateur ;
la première borne de la deuxième armoire étant connectée à la première borne de la résistance de décharge via un troisième commutateur ;
la deuxième borne de la deuxième armoire étant connectée à la deuxième borne de la résistance de décharge via un quatrième commutateur ;
la deuxième borne de la première armoire étant connectée à la première borne de la résistance de décharge via le troisième commutateur ;
la première borne de la deuxième armoire étant connectée à la deuxième borne de la résistance de décharge via le deuxième commutateur ; et
le contrôleur de réponse aux défauts étant configuré pour commander le premier commutateur, le deuxième commutateur, le troisième commutateur et le quatrième commutateur.

12. ESS selon la revendication 11,
la connexion électrique sélective de la résistance de décharge à la première armoire comprenant :
la fermeture du premier commutateur et du deuxième commutateur.

13. ESS selon la revendication 12,
le contournement électrique de la première armoire après la décharge de l'énergie électrique stockée dans la première armoire comprenant :
l'ouverture du deuxième commutateur et la fermeture du troisième commutateur.

14. ESS selon la revendication 13,
la connexion électrique sélective de la résistance de décharge à la deuxième armoire comprenant :
la fermeture du quatrième commutateur alors que la première armoire est contournée électriquement.

15. ESS selon la revendication 14,
le contournement électrique de la deuxième armoire après la décharge de l'énergie électrique stockée dans la deuxième armoire comprenant :
la fermeture du deuxième commutateur.
